(19) Europäisches Patentamt
European Patent Office
Office européen des brevets

(11) EP 3 550 655 B1

(12) EUROPEAN PATENT SPECIFICATION

(45) Date of publication and mention of the grant of the patent:
**19.07.2023 Bulletin 2023/29**

(21) Application number: **17875549.2**

(22) Date of filing: **28.11.2017**

(51) International Patent Classification (IPC):
***H01M 10/0525*** *(2010.01)* ***H01M 4/131*** *(2010.01)*
***H01M 4/525*** *(2010.01)* ***H01M 4/62*** *(2006.01)*
***H01M 4/02*** *(2006.01)*

(52) Cooperative Patent Classification (CPC):
**H01M 4/625; H01M 4/525; H01M 10/0525;**
H01M 2004/028; Y02E 60/10

(86) International application number:
**PCT/KR2017/013629**

(87) International publication number:
**WO 2018/101693 (07.06.2018 Gazette 2018/23)**

(54) **LITHIUM SECONDARY BATTERY**

LITHIUMSEKUNDÄRBATTERIE

BATTERIE SECONDAIRE AU LITHIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2016 KR 20160160665**

(43) Date of publication of application:
**09.10.2019 Bulletin 2019/41**

(73) Proprietor: **Samsung SDI Co., Ltd.**
**Yongin-si, Gyeonggi-do 17084 (KR)**

(72) Inventors:
- **WON, Jungyeon**
  **Yongin-si**
  **Gyeonggi-do 17084 (KR)**
- **KIM, Dongjin**
  **Yongin-si**
  **Gyeonggi-do 17084 (KR)**
- **KIM, Eun Jung**
  **Yongin-si**
  **Gyeonggi-do 17084 (KR)**
- **CHA, Jungwook**
  **Yongin-si**
  **Gyeonggi-do 17084 (KR)**
- **PARK, Dohyung**
  **Yongin-si**
  **Gyeonggi-do 17084 (KR)**
- **LEE, Kunwoo**
  **Yongin-si**
  **Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(56) References cited:
**EP-A2- 2 325 138** **CN-U- 205 564 891**
**KR-A- 20150 118 374** **KR-A- 20160 017 364**
**US-A1- 2005 142 440** **US-A1- 2010 167 118**
**US-A1- 2013 302 693** **US-B2- 8 691 441**

- **Robert Kostecki ET AL: "G.7 Study of Cathode Degradation in Gen 2 High Power Lithium-IOn Cells", Diagnostic Examination of Generation 2 Lithium-Ion Cells and Assessment of Performance Degradation Mechanisms, 31 July 2005 (2005-07-31), pages 1-196, XP055355445, Argonne national Laboratory Retrieved from the Internet: URL:http://www.ipd.anl.gov/anlpubs/2005/07 /53944.pdf [retrieved on 2017-03-16]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **HAI YEN TRAN ET AL: "Influence of electrode preparation on the electrochemical performance of LiNiCoAlOcomposite electrodes for lithium-ion batteries", JOURNAL OF POWER SOURCES, ELSEVIER SA, CH, vol. 210, 7 March 2012 (2012-03-07), pages 276-285, XP028488003, ISSN: 0378-7753, DOI: 10.1016/J.JPOWSOUR.2012.03.017 [retrieved on 2012-03-21]**

## Description

### Technical Field

A lithium secondary battery is disclosed.

### Background Art

A lithium secondary battery has recently drawn attention as a power source for small portable electronic devices.

Such a lithium secondary battery includes a positive electrode including a positive active material, a negative electrode including a negative active material, a separator disposed between the positive electrode and the negative electrode, and an electrolyte.

The positive active material may include an oxide including lithium and a transition metal and having a structure capable of intercalating lithium ions such as $LiCoO_2$, $LiMn_2O_4$, $LiNi_{1-x}Co_xO_2$ ($0 < x < 1$), and the like.

The negative active material may include various carbon-based materials capable of intercalating/deintercalating lithium such as artificial graphite, natural graphite, hard carbon, and the like, or a Si-based active material.

Robert Kostecki et al., Diagnostic Examination of Generation 2 Lithium-Ion Cells and Assessment of Performance Degradation Mechanisms, 31 July 2005 (2005-07-31), pages 1-196 refers to Raman spectroscopy of a cathode surface being coated with $LiNi_{0.8}Co_{0.15}Al_{0.05}O_2$ as a positive active material and acetylene black as well as graphite as conductive materials. HAI YEN TRAN et al., JOURNAL OF POWER SOURCES, ELSE VIER SA, CH, vol. 210,7 March 2012 (2012-03-07), pages 276-285 deals about the influence of electrode preparation on the electrochemical performance of LiNiCoAlO composite electrodes for lithium ion batteries. US 2010/0167118 A1, US 2005/0142440 A1, and CN 205564891 U are examples of lithium ion batteries with a positive electrode including a carbon conductive material.

## DETAILED DESCRIPTION OF THE INVENTION

### Technical Problem

An embodiment provides a lithium secondary battery having improved cycle-life characteristics.

### Technical Solution

The invention is defined by the appended claims. The description that follows is subjected to this limitation. Any disclosure lying outside the scope of said claims is only intended for illustrative as well as comparative purposes.

The present invention provides a lithium secondary battery including a positive electrode including a positive active material of Chemical Formula 1, a plate-like conductive material, and a spherical conductive material; a negative electrode including a negative active material; and an electrolyte, wherein the positive electrode has a W value defined by Equation 1 of 0.9 to 2. The spherical conductive material is carbon black, ketjen black, acetylene black, denka black, or a combination thereof. A mixing ratio of the plate-like conductive material and the spherical conductive material is a weight ratio of 1 : 1 to 1 : 3. An amount of the plate-like conductive material is 0.5 wt% to 3 wt% based on a total weight of the positive active material, the plate-like conductive material, and the spherical conductive material. An amount of the spherical conductive material is 1.5 wt% to 3 wt% based on a total weight of the positive active material, the plate-like conductive material, and the spherical conductive material.

[Chemical Formula 1] $Li_aNi_xCo_yMe_zO_2$

In Chemical Formula 1, $0.9 \leq a \leq 1.1$, $0.05 \leq y \leq 0.5$, $0.01 \leq z \leq 0.5$, $x + y + z = 1$, and Me is Mn.

[Equation 1]

W = Raman spectrum peak intensity ratio ($I_{A1g}/I_{Eg}$) of a peak intensity ($I_{A1g}$) of $A_{1g}$ peak (500 $cm^{-1}$ to 600 $cm^{-1}$) relative to a peak intensity ($I_{Eg}$) of $E_g$ peak (400 $cm^{-1}$ to 470 $cm^{-1}$),

wherein the peak intensity ratio is an integral height ratio of peaks and wherein the peak intensity ratio is a measurement value after charging and discharging a lithium secondary battery, the charging and discharging is performed by charging and discharging once to three times at 0.1 C to 3 C.

The W value may be 0.9 to 1.5.

In the positive electrode, an amount of the positive active material may be 80 wt% to 99 wt% based on a total weight of the positive active material, the plate-like conductive material, and the spherical conductive material.

The plate-like conductive material may be sheet-shaped graphite, graphene, flake-shaped graphite, or a combination thereof.

The spherical conductive material may have a specific surface area of 5 $m^2/g$ to 1200 $m^2/g$.

The peak intensity ratio may be an integral height ratio of peaks.

The x may be 0.60 to 0.90.

Other specific details of embodiments of the present invention are included in the following detailed description.

## Advantageous Effects

The lithium secondary battery according to an embodiment may exhibit excellent cycle-life characteristics.

## Description of the Drawings

FIG. 1 is a view explaining an oxygen oscillation mode of a positive active material.
FIG. 2 is a view schematically illustrating a structure of a positive electrode according to an embodiment of the present invention.
FIG. 3 is a graph showing Raman spectrum results of the positive electrode obtained by disassembling the battery cell in Example 1 after charging and discharging.
FIG. 4 is a surface SEM image of the positive electrode obtained by charging and discharging the battery cell of Example 1 and then disassembling it.
FIG. 5 is a graph showing capacity retention at room temperature of Example 1 and Comparative Example 1.
FIG. 6 is a graph showing capacity retention at high temperature of Example 1 and Comparative Example 1.
FIG. 7 is a graph showing capacity retention at room temperature of Comparative Examples 1 to 3.

## Mode for Invention

Hereinafter, embodiments of the present invention are described in detail. However, these embodiments are exemplary.

A lithium secondary battery according to an embodiment of the present invention includes a positive electrode including a positive active material of Chemical Formula 1, a plate-like conductive material, and a spherical conductive material; a negative electrode including a negative active material; and an electrolyte.

[Chemical Formula 1] $Li_aNi_xCo_yMe_zO_2$

In Chemical Formula 1, $0.9 \leq a \leq 1.1$, $0.5 \leq x \leq 0.90$, $0.05 \leq y \leq 0.5$, $0.01 \leq z \leq 0.5$, and $x + y + z = 1$. According to an embodiment, the x may be 0.6 to 0.90.
Me is Al.

When a Raman spectrum of a positive active material represented by Chemical Formula 1 is measured, two types of Raman vibration modes are present, which indicate peaks shown at a position ($E_g$) of 400 $cm^{-1}$ to 470 $cm^{-1}$ and a position ($A_{1g}$) of 500 $cm^{-1}$ to 600 $cm^{-1}$. In these two types of Raman vibration modes, as shown in FIG. 1, the $E_g$ peak shown at the $E_g$ position indicates a horizontal vibration mode, and the peak $A_{lg}$ shown at $A_{1g}$ position indicates a vertical vibration mode. The vertical vibration mode receives an influence during intercalation and deintercalation of lithium ions. Specifically illustrated, a vibration degree may vary depending on a charge state of an active material, and the vertical vibration mode increases in a charge state, that is, in a state that lithium ions are deintercalated from the positive active material, but the vertical vibration mode decreases in a discharge state, that is, in a state that the lithium ions are intercalated. Accordingly, a ratio between the horizontal vibration mode and the vertical vibration mode changes depending on a charge state (SOC: State of Charge), and in an embodiment, a lithium secondary battery having excellent cycle-life characteristics is provided by adjusting a W value defined by Equation 1.

The positive electrode has a W value defined by Equation 1 ranging from 0.9 to 2, or 0.9 to 1.5. If the W value is less than 0.9 or greater than 2, cycle-life characteristics may be deteriorated.

[Equation 1]

W = Raman spectrum peak intensity ratio ($I_{A1g}/I_{Eg}$) of a peak intensity ($I_{A1g}$) of $A_{1g}$ peak (500 $cm^{-1}$ to 600 $cm^{-1}$) relative to a peak intensity ($I_{Eg}$) of $E_g$ peak (400 $cm^{-1}$ to 470 $cm^{-1}$)

Raman spectrum peak intensity is measured by using an Ar laser, unless particularly limited. The Ar laser may use a wavelength ranging from about 514 nm $\pm$ about 10 nm. In addition, a peak intensity ratio indicates a peak integral height ratio.

The W value, that is, the peak intensity ratio of the Raman spectrum is measured with respect to a positive electrode taken by charging and discharging the lithium secondary battery and disassembling it. The charging and discharging processes may be performed by charging and discharging once to three times at 0.1 C to 3 C.

A positive active material layer according to an embodiment includes a plate-like conductive material and a spherical conductive material conductive material together, and when either one of the plate-like conductive material and the spherical conductive material is included, a W value of a positive electrode may be inappropriately out of the range.

In the positive electrode, a mixing ratio of the plate-like conductive material and the spherical conductive material has a weight ratio of 1 : 1 to 1 : 3. When the mixing ratio of the plate-like conductive material and the spherical conductive material is within the range, much excellent capacity retention may be obtained.

In addition, in the positive electrode, an amount of the plate-like conductive material is 0.5 wt% to 3 wt% based on a total weight of the positive active material, the plate-like conductive material, and the spherical conductive material.

In addition, in the positive electrode, an amount of the spherical conductive material is 1.5 wt% to 3 wt% based on a total weight of the positive active material, the plate-like conductive material, and the spherical conductive material.

In other words, a positive electrode according to an embodiment may include the plate-like conductive material and the spherical conductive material in a weight ratio of 1 : 1 to 1 : 3.

When the mixing ratio of the plate-like conductive material and the spherical conductive material and the amounts of the plate-like conductive material and the spherical conductive material are respectively included within the ranges, a positive electrode having a desired W value of 0.9 to 2 may be obtained. In addition, when the amounts of the plate-like conductive material and the spherical conductive material are included within the ranges, the conductive material may be very effectively distributed in the positive electrode, and accordingly, a resistance decrease effect of the positive electrode may be much increased.

In the positive electrode, an amount of the positive active material may be 80 wt% to 99 wt% or 94 wt% to 98 wt% based on a total weight of the positive active material, the plate-like conductive material, and the spherical conductive material.

The plate-like conductive material may be sheet-shaped graphite, graphene, flake-shaped graphite, or a combination thereof. In addition, the spherical conductive material is carbon black, ketjen black, acetylene black, denka black, or a combination thereof.

The spherical conductive material may have a specific surface area of 5 $m^2/g$ to 1200 $m^2/g$, and more preferably 30 $m^2/g$ to 500 $m^2/g$. The specific surface area may be a BET specific surface area measured by a powder adsorption method.

As described above, a positive active material according to an embodiment is represented by Chemical Formula 1 and has the number of Ni moles of x in a range of 0.50 to 0.90 and specifically, 0.60 to 0.90, and thus a positive active

material having a high Ni content. In this way, in a battery using the positive active material having a high Ni content, when the positive electrode has a desired W value of 0.9 to 2, cycle-life characteristics may be greatly improved. When a positive active material having a low Ni content, that is, x of less than 0.50, a positive electrode may have a desired W value of 0.9 to 2, but the effect of improving cycle-life characteristics may not be obtained.

In this way, a lithium secondary battery according to an embodiment of the present invention includes a positive electrode using a compound represented by Chemical Formula 1 as a positive active material, a plate-like conductive material and a spherical conductive material as a conductive material, and the positive electrode taken by disassembling the lithium secondary battery after the charge and discharge has a W value of 0.9 to 2, and accordingly, the lithium secondary battery under this condition may exhibit improved cycle-life characteristics and particularly, improved cycle-life characteristics at both room temperature and a high temperature. However, when a lithium secondary battery does not satisfy any of the conditions, for example, uses a positive active material having a low Ni content, uses either one of the plate-like conductive material and the spherical conductive material as a conductive material, or has a W value out of the range of 0.9 to 2, improved cycle-life characteristics may not be obtained.

The positive active material layer further includes a binder. When the binder is further included, the binder an amount of the binder may be 1 wt% to 5 wt% based on a total amount of the positive active material layer. In addition, when the binder is further included, an amount of the positive active material may be 75 wt% to 98 wt%, or 89 wt% to 97 wt% based on a total weight of the positive active material layer (i.e., a total weight of the positive active material, the binder, the plate-like conductive material, and the spherical conductive material). An amount of the plate-like conductive material may be 0.5 wt% to 10 wt% or 0.5 wt% to 3 wt%. In addition, an amount of the spherical conductive material may be 0.5 wt% to 10 wt% or 1.5 wt% to 3 wt%.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene butadiene rubber, an epoxy resin, nylon, and the like, but are not limited thereto.

The positive electrode further includes a current collector supporting the positive active material layer. The current collector may be an aluminum foil, a nickel foil, or a combination thereof, but is not limited thereto.

The negative electrode includes a negative active material layer including a negative active material and a current collector supporting the negative active material layer.

The negative active material may be a material that reversibly intercalates/deintercalates lithium ions, a lithium metal, a lithium metal alloy, a material capable of doping/dedoping lithium, or a transition metal oxide.

The material that reversibly intercalates/deintercalates lithium ions is a carbon material, and may be any generally-used carbon-based negative active material in a lithium ion secondary battery, and examples thereof may be crystalline carbon, amorphous carbon, or a combination thereof. Examples of the crystalline carbon may be a graphite such as a shapeless (unspecified shape), sheet-shaped, flake, spherical shaped or fiber-shaped natural graphite or artificial graphite, and examples of the amorphous carbon may be soft carbon or hard carbon, a mesophase pitch carbonized product, fired cokes, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, and Sn.

The material capable of doping and dedoping lithium may be Si, $SiO_x$ ($0 < x < 2$), a Si-Q alloy (wherein Q is an element selected from the group consisting of an alkali metal, an alkaline-earth metal, a Group 13 element, a Group 14 element, a Group 15 element, a Group 16 element, a transition element, a rare earth element, and a combination thereof, and not Si), Sn, $SnO_2$, a Sn-R alloy (wherein R is an element selected from the group consisting of an alkali metal, an alkaline-earth metal, a Group 13 element, a Group 14 element, a Group 15 element, a Group 16 element, a transition element, a rare earth element, and a combination thereof, and not Sn), and the like, and at least one thereof may be mixed with $SiO_2$. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be vanadium oxide, lithium vanadium oxide, or lithium titanium oxide.

In the negative active material layer, the negative active material may be included in an amount of about 95 wt% to about 99 wt% based on the total weight of the negative active material layer.

In an embodiment of the present invention, the negative active material layer includes a binder, and optionally a conductive material. In the negative active material layer, an amount of the binder may be 1 wt% to 5 wt% based on a total amount of the negative active material layer. When the conductive material is further included, 90 wt% to 98 wt% of negative active material, 1 wt% to 5 wt% of the binder, and 1 wt% to 5 wt% of the conductive material may be used.

The binder improves binding properties of negative active material particles with one another and with a current collector. The binder includes a non-aqueous binder, an aqueous binder, or a combination thereof.

The non-aqueous binder may include polyvinylchloride, carboxylated polyvinylchloride, polyvinylfluoride, an

ethylene oxide-containing polymer, polyvinylpyrrolidone, polyurethane, polytetrafluoroethylene, polyvinylidene fluoride, polyethylene, polypropylene, polyamideimide, polyimide polytetrafluoroethylene, or a combination thereof.

The aqueous binder may include a styrene-butadiene rubber, an acrylated styrene-butadiene rubber (SBR), an acrylonitrile-butadiene rubber, an acrylic rubber, a butyl rubber, a fluorine rubber, an ethylene propylene copolymer, polyethylene oxide, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the aqueous binder is used as the negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. Such a thickener may be included in an amount of 0.1 parts by weight to 3 parts by weight based on 100 parts by weight of the negative active material.

The conductive material may be a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone and the like. The alcohol-based solvent include ethyl alcohol, isopropyl alcohol, and the like, and examples of the aprotic solvent include nitriles such as R-CN (where R is a C2 to C20 linear, branched, or cyclic hydrocarbon group, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance, which may be understood by a person having an ordinary skill in this art.

The carbonate-based solvent may include a mixture of a cyclic carbonate and a linear (chain) carbonate. In this case, when the cyclic carbonate and the linear carbonate may be mixed together in a volume ratio of 1:1 to 1:9, performance of the electrolyte may be enhanced.

The organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 2.

[Chemical Formula 2]

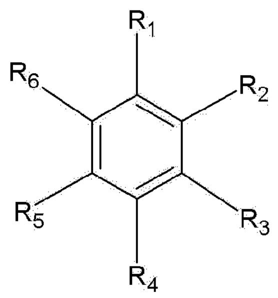

In Chemical Formula 2, $R_1$ to $R_6$ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive for improving the cycle-life characteristics of vinylene carbonate or an ethylene carbonate-based compound of Chemical Formula 3 in order to improve cycle life of a battery.

[Chemical Formula 3]

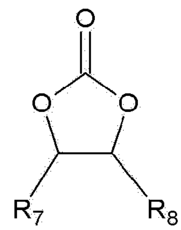

In Chemical Formula 3, $R_7$ and $R_8$ are the same or different, and hydrogen, a halogen, a cyano group (CN), a nitro group ($NO_2$), and a fluorinated C1 to C5 alkyl group, provided that at least one of $R_7$ and $R_8$ is selected from a halogen, a cyano group (CN), a nitro group ($NO_2$), and a fluorinated C1 to C5 alkyl group, and $R_7$ and $R_8$ are not simultaneously hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving the cycle-life characteristics may be used within an appropriate range.

The lithium salt dissolved in an organic solvent supplies a battery with lithium ions, basically operates the lithium secondary battery, and improves transportation of the lithium ions between a positive electrode and a negative electrode. Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, LiN $(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$, wherein, x and y are natural numbers, for example an integer ranging from 1 to 20), LiCl, LiI, and $LiB(C_2O_4)_2$ (lithium bis(oxalato) borate: LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a lithium secondary battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 2 is an exploded perspective view of a lithium secondary battery according to an embodiment. The lithium secondary battery according to an embodiment is illustrated as a prismatic battery but is not limited thereto and may include variously- shaped batteries such as a cylindrical battery, a pouch battery, and the like.

Referring to FIG. 2, a lithium secondary battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

**Mode for performing Invention**

Hereinafter, examples of the present invention and comparative examples are described. These examples, however, are not in any sense to be interpreted as limiting the scope of the invention.

(Example 1)

94 wt% of a $LiNi_{0.84}Co_{0.145}Al_{0.015}O_2$ positive active material, 2 wt% of a flake-shaped graphite plate-like conductive material, 2 wt% of a denka black spherical conductive material, and 2 wt% of a polyvinylidene fluoride binder were mixed in an N-methyl pyrrolidone solvent to prepare positive active material slurry.

The positive active material slurry was coated on an Al foil current collector, dried, and compressed to manufacture a positive electrode.

97 wt% of a Si and graphite nanoparticle mixture (a mixing weight ratio of Si and graphite nanoparticles: 45:55) negative active material, 1.5 wt% of carboxymethyl cellulose, and 1.5 wt% of a styrene-butadiene rubber were mixed in a water solvent to prepare negative active material slurry. This negative active material slurry was coated on a Cu foil, dried, and compressed to manufacture a negative electrode.

The positive electrode, the negative electrode, and an electrolyte were used in a common method to manufacture a lithium secondary battery cell. The electrolyte was prepared by dissolving 1.0 M $LiPF_6$ in a mixed solvent of ethylene carbonate and dimethyl carbonate (a volume ratio of 50 : 50).

(Comparative Example 1)

95 wt% of a $LiNi_{0.84}Co_{0.145}Al_{0.015}O_2$ positive active material, 2 wt% of a denka black spherical conductive material, and 3 wt% of a polyvinylidene fluoride binder were mixed in an N-methyl pyrrolidone solvent to prepare positive active material slurry.

The positive active material slurry was coated on an Al foil current collector, dried, and compressed to manufacture a positive electrode.

The positive electrode was used to manufacture a lithium secondary battery cell according to the same method as Example 1.

(Comparative Example 2)

92 wt% of a $LiNi_{0.84}Co_{0.145}Al_{0.015}O_2$ positive active material, 1 wt% of a flake-shaped graphite plate-like conductive material, 4 wt% of a denka black spherical conductive material, and 3 wt% of a polyvinylidene fluoride binder were mixed in an N-methyl pyrrolidone solvent to prepare positive active material slurry.

The positive active material slurry was coated on an Al foil current collector, dried, and compressed to manufacture a positive electrode.

The positive electrode was used to manufacture a lithium secondary battery cell according to the same method as Example 1.

(Comparative Example 3)

95.4 wt% of a $LiNi_{0.84}Co_{0.145}Al_{0.015}O_2$ positive active material, 1 wt% of a flake-shaped graphite plate-like conductive material, 0.6 wt% of a denka black spherical conductive material, and 3 wt% of a polyvinylidene fluoride binder were mixed in an N-methyl pyrrolidone solvent to prepare positive active material slurry.

The positive active material slurry was coated on an Al foil current collector, dried, and compressed to manufacture a positive electrode.

The positive electrode was used to manufacture a lithium secondary battery cell according to the same method as Example 1.

* Raman Spectrum Measurement

The lithium secondary battery cell according to Example 1 was twice charged and discharged at 0.1 C and charged in SOC (State of Charge) 100 % (in a charge state up to charge capacity of 100 % based on 100 % of entire battery charge capacity during the charge and discharge at 2.8 V to 4.3 V) and then, disassembled to take the positive electrode. A Raman spectrum of the positive electrode was measured by using an Ar laser having a wavelength of 514 nm. Among the results, the result of Example 1 is shown in FIG. 3, and two peaks separated from the measurements and marked by a dotted line are shown in FIG. 3 (in FIG. 3, an x axis is a Raman shift, and a y axis is intensity).

As shown in FIG. 3, the positive electrode of Example 1 showed an $E_g$ peak at 467 $cm^{-1}$ and an $A_{1g}$ peak at 545 $cm^{-1}$, and a Raman spectrum peak intensity ratio ($I_{A1g}/I_{Eg}$) of peak intensity ($I_{A1g}$) of the $A_{1g}$ peak relative to peak intensity ($I_{Eg}$) of the $E_g$ peak was about 1.13.

The lithium secondary battery cells according to Example 1 and Comparative Example 1 were charged and discharged at 0.2 C. After the charge and discharge, the battery cells were dissembled to take positive electrodes. In the obtained positive electrodes, a surface SEM photograph of the positive electrode of Example 1 is shown in FIG. 4. On the surface shown in FIG. 4, a state of charge (SOC) about 12 points was measured.

A Raman spectrum in SOC100 (in a charge state up to charge capacity of 100 % based on 100 % of entire battery charge capacity) is measured by using an Ar laser having a wavelength of 514 nm, and a Raman spectrum peak intensity ratio ($I_{A1g}/I_{Eg}$) of peak intensity ($I_{A1g}$) of the $A_{1g}$ peak (545 $cm^{-1}$) relative to peak intensity ($I_{E9}$) of the $E_g$ peak (467 $cm^{-1}$), W, was calculated, and the results are shown in Table 1.

In Table 1, charge states of Example 1 and Comparative Example 1 were measured at the same point, and the point is marked as x.

(Table 1)

| | Example 1 | Comparative Example 1 |
|---|---|---|
| Point 2 | 1.149 | 0.811 |
| Point 4 | 0.916 | 0.840 |
| Point 5 | 0.900 | 0.780 |
| Point 7 | 0.900 | 0.839 |

As shown in Table 1, the battery cell of Example 1 showed the W values of the positive electrode in a range of 0.9 to 2, while the battery cell of Comparative Example 1 showed the W values of the positive electrode in a range of 0.780 to 0.840, which is less than 0.9.

* Cycle-life Characteristics

The lithium secondary battery cells of Example 1 and the Comparative Example 1 were respectively 300 times charged and discharged respectively at room temperature of 25 °C and at a high temperature of 45 °C at 0.5 C/1 C (the room temperature: 25 °C) and 1 C/1 C (the high temperature: 45 °C), and a discharge capacity ratio of discharge capacity at each cycle relative to the 1st discharge capacity, and the results are respectively shown in FIGS. 5 and 6.

In addition, the lithium secondary battery cells according to Comparative Examples 2 and 3 were 300 times charged and discharged at 0.5 C/1 C at room temperature (25 °C), and a discharge capacity ratio of discharge capacity at each cycle relative to discharge capacity at the 1st cycle, and the results are shown in FIG. 7. In addition, the room temperature result of Comparative Example 1 for comparison is also shown in FIG. 7.

As shown in FIGS. 5 and 6, the lithium secondary battery cell of Example 1 exhibited high capacity retention, that is, improved cycle-life characteristics at room temperature and a high temperature compared with the lithium secondary battery cell of Comparative Example 1. In addition, as shown in FIG. 8, the lithium secondary battery cells of Comparative Examples 2 and 3 exhibited a similar capacity retention at room temperature to that of Comparative Example 1 and thus no capacity retention improvement effect, when the plate-like conductive material and the spherical conductive material were used together but out of a weight ratio of 1 : 1 to 1 : 3.

## Claims

1. A lithium secondary battery, comprising

a positive electrode comprising a positive active material of Chemical Formula 1, a plate-like conductive material, and a spherical conductive material,

wherein the spherical conductive material is carbon black, ketjen black, acetylene black, denka black, or a combination thereof,

a mixing ratio of the plate-like conductive material and the spherical conductive material is a weight ratio of 1 : 1 to 1 : 3,

an amount of the plate-like conductive material is 0.5 wt% to 3 wt% based on a total weight of the positive active material, the plate-like conductive material, and the spherical conductive material, and

an amount of the spherical conductive material is 1.5 wt% to 3 wt% based on a total weight of the positive active material, the plate-like conductive material, and the spherical conductive material;

a negative electrode including a negative active material; and

an electrolyte,

wherein the positive electrode has a W value defined by Equation 1 of 0.9 to 2:

[Chemical Formula 1] $Li_aNi_xCo_yMe_zO_2$

wherein, in Chemical Formula 1, $0.9 \leq a \leq 1.1$, $0.5 \leq x \leq 0.90$, $0.05 \leq y \leq 0.5$, $0.01 \leq z \leq 0.5$, $x + y + z = 1$, and Me is Al,

[Equation 1]

W = Raman spectrum peak intensity ratio ($I_{A1g}/I_{Eg}$) of a peak intensity ($I_{A1g}$) of $A_{1g}$ peak (500 $cm^{-1}$ to 600 $cm^{-1}$) relative to a peak intensity ($I_{Eg}$) of $E_g$ peak (400 $cm^{-1}$ to 470 $cm^{-1}$),

wherein the peak intensity ratio is an integral height ratio of peaks and wherein the peak intensity ratio is a measurement value after charging and discharging a lithium secondary battery, the charging and discharging is performed by charging and discharging once to three times at 0.1 C to 3 C.

**2.** The lithium secondary battery of claim 1, wherein the W value is 0.9 to 1.5.

**3.** The lithium secondary battery of claim 1, wherein an amount of the positive active material is 80 wt% to 99 wt% based on a total weight of the positive active material, the plate-like conductive material, and the spherical conductive material.

**4.** The lithium secondary battery of claim 1, wherein the plate-like conductive material is sheet-shaped graphite, graphene, flake-shaped graphite or a combination thereof.

**5.** The lithium secondary battery of claim 1, wherein the spherical conductive material has a specific surface area of 5 $m^2/g$ to 1200 $m^2/g$.

**6.** The lithium secondary battery of claim 1, wherein the x is 0.60 to 0.90.

**Patentansprüche**

**1.** Lithium-Sekundärbatterie, umfassend

eine positive Elektrode, die ein positives aktives Material der chemischen Formel 1, ein plattenartiges leitfähiges Material und ein kugelförmiges leitfähiges Material umfasst,

wobei das kugelförmige leitfähige Material Ruß, Ketjenblack, Acetylenruß, Denkablack oder eine Kombination davon ist,

ein Mischungsverhältnis zwischen dem plattenförmigen leitfähigen Material und dem kugelförmigen leitfähigen Material ein Gewichtsverhältnis von 1 : 1 bis 1 : 3 ist,

eine Menge des plattenartigen leitfähigen Materials 0,5 Gew.-% bis 3 Gew.-% beträgt, bezogen auf ein Gesamtgewicht des positiven aktiven Materials, des plattenartigen leitfähigen Materials und des kugelförmigen leitfähigen Materials, und
eine Menge des kugelförmigen leitfähigen Materials 1,5 Gew.-% bis 3 Gew.-% beträgt, bezogen auf ein Gesamtgewicht des positiven aktiven Materials, des plattenartigen leitfähigen Materials und des kugelförmigen leitfähigen Materials;
eine negative Elektrode, die ein negatives aktives Material enthält; und
einen Elektrolyt,
wobei die positive Elektrode einen durch Gleichung 1 definierten W-Wert von 0,9 bis 2 aufweist:

[Chemische Formel 1] $Li_aNi_xCo_yMe_zO_2$

wobei in der chemischen Formel 1 $0,9 \leq a \leq 1,1$, $0.5 \leq x \leq 0,90$, $0,05 \leq y \leq 0,5$, $0,01 \leq z \leq 0,5$, $x + y + z = 1$, und Me Al ist,

[Gleichung 1]

W = Ramanspektrum-Peakintensitätsverhältnis ($I_{A1g}/I_{Eg}$) einer Peakintensität ($I_{A1g}$) eines $A_{1g}$-Peaks (500 $cm^{-1}$ bis 600 $cm^{-1}$) relativ zu einer Peakintensität ($I_{Eg}$) eines $E_g$-Peaks (400 $cm^{-1}$ bis 470 $cm^{-1}$),

wobei das Peakintensitätsverhältnis ein integrales Höhenverhältnis von Peaks ist und wobei das Peakintensitätsverhältnis ein Messwert nach dem Laden und Entladen einer Lithium-Sekundärbatterie ist, wobei das Laden und Entladen durch ein- bis dreimaliges Laden und Entladen bei 0.1 C bis 3 C durchgeführt wird.

**2.** Lithium-Sekundärbatterie nach Anspruch 1, wobei der W-Wert 0,9 bis 1,5 beträgt.

**3.** Lithium-Sekundärbatterie nach Anspruch 1, wobei eine Menge des positiven aktiven Materials 80 Gew.-% bis 99 Gew.-% beträgt, bezogen auf ein Gesamtgewicht des positiven aktiven Materials, des plattenartigen leitfähigen Materials und des kugelförmigen leitfähigen Materials.

**4.** Lithium-Sekundärbatterie nach Anspruch 1, wobei das plattenartige leitfähige Material blattförmiger Graphit, Graphen, flockenförmiger Graphit oder eine Kombination davon ist.

**5.** Lithium-Sekundärbatterie nach Anspruch 1, wobei das kugelförmige leitfähige Material eine spezifische Oberfläche von 5 $m^2/g$ bis 1200 $m^2/g$ aufweist.

**6.** Lithium-Sekundärbatterie nach Anspruch 1, wobei x 0,60 bis 0,90 beträgt.

## Revendications

**1.** Batterie secondaire au lithium comprenant

une électrode positive comprenant un matériau actif positif de formule chimique 1, un matériau conducteur en paillettes, et un matériau conducteur sphérique,
dans laquelle le matériau conducteur sphérique est un noir de carbone, un noir Ketjen, un noir d'acétylène, un noir Denka, ou une combinaison de ceux-ci,
le rapport de mélange du matériau conducteur en paillettes au matériau conducteur sphérique est un rapport en poids de 1:1 à 1:3,
une quantité du matériau conducteur en paillettes est de 0,5 % en poids à 3 % en poids par rapport à un poids total du matériau actif positif, du matériau conducteur en paillettes, et du matériau conducteur sphérique, et
une quantité du matériau conducteur sphérique est de 1,5 % en poids à 3 % en poids par rapport à un poids total du matériau actif positif, du matériau conducteur en paillettes, et du matériau conducteur sphérique ;
une électrode négative contenant un matériau actif négatif ; et
un électrolyte,

dans laquelle l'électrode positive a une valeur W, définie par l'équation 1, de 0,9 à 2 :

[formule chimique 1] $Li_aNi_xCo_yMe_zO_2$

dans laquelle, dans la formule chimique 1, $0{,}9 \leq a \leq 1{,}1$, $0{,}5 \leq x \leq 0{,}90$, $0{,}05 \leq y \leq 0{,}5$, $0{,}01 \leq z \leq 0{,}5$, $x + y + z = 1$, et Me est Al,

[équation 1]

W = rapport des intensités de pics de spectre Raman ($I_{A1g}/I_{Eg}$) d'une intensité de pic ($I_{A1g}$) du pic $A_{1g}$ (500 $cm^{-1}$ à 600 $cm^{-1}$) à l'intensité de pic ($I_{Eg}$) du pic $E_g$ (400 $cm^{-1}$ à 470 $cm^{-1}$),

où le rapport des intensités de pics est un rapport des hauteurs entières des pics, et où le rapport des intensités de pics est une valeur de mesure après charge et décharge d'une batterie secondaire au lithium, les charge et décharge étant effectuées par charge et décharge une à trois fois à une température de 0,1°C à 3°C.

**2.** Batterie secondaire au lithium selon la revendication 1, dans laquelle la valeur W est de 0,9 à 1,5.

**3.** Batterie secondaire au lithium selon la revendication 1, dans laquelle une quantité du matériau actif positif est de 80 % en poids à 99 % en poids par rapport à un poids total du matériau actif positif, du matériau conducteur en paillettes, et du matériau conducteur sphérique.

**4.** Batterie secondaire au lithium selon la revendication 1, dans laquelle le matériau conducteur en paillettes est un graphite en feuilles, un graphène, un graphite en copeaux ou une combinaison de ceux-ci.

**5.** Batterie secondaire au lithium selon la revendication 1, dans laquelle le matériau conducteur sphérique a une surface spécifique de 5 $m^2/g$ à 1200 $m^2/g$.

**6.** Batterie secondaire au lithium selon la revendication 1, dans laquelle x vaut 0,60 à 0,90.

FIG. 1

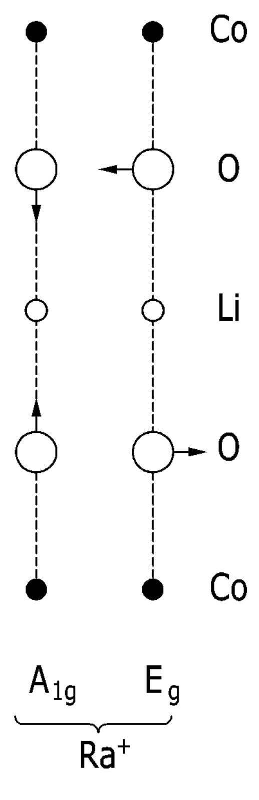

FIG. 2

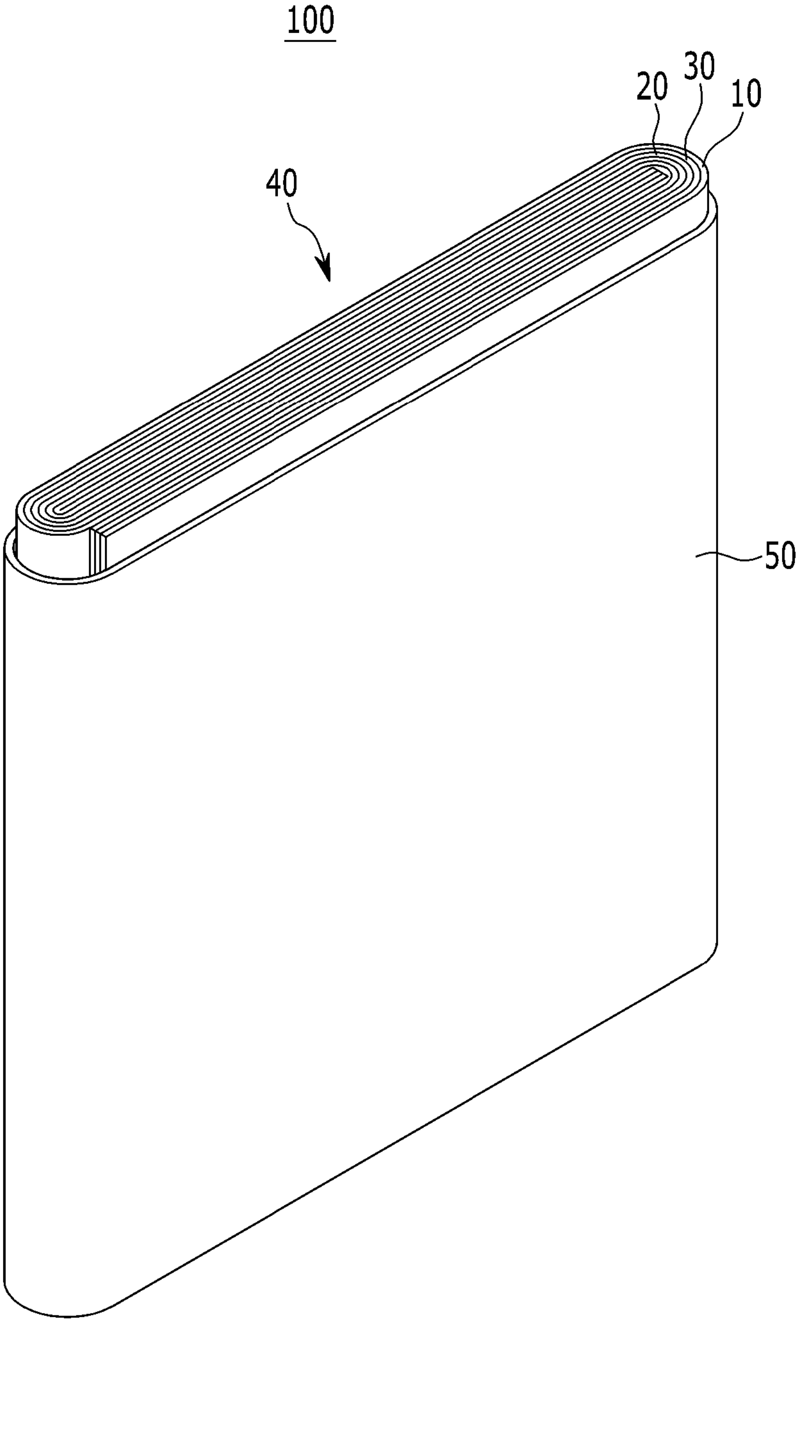


【

FIG. 3

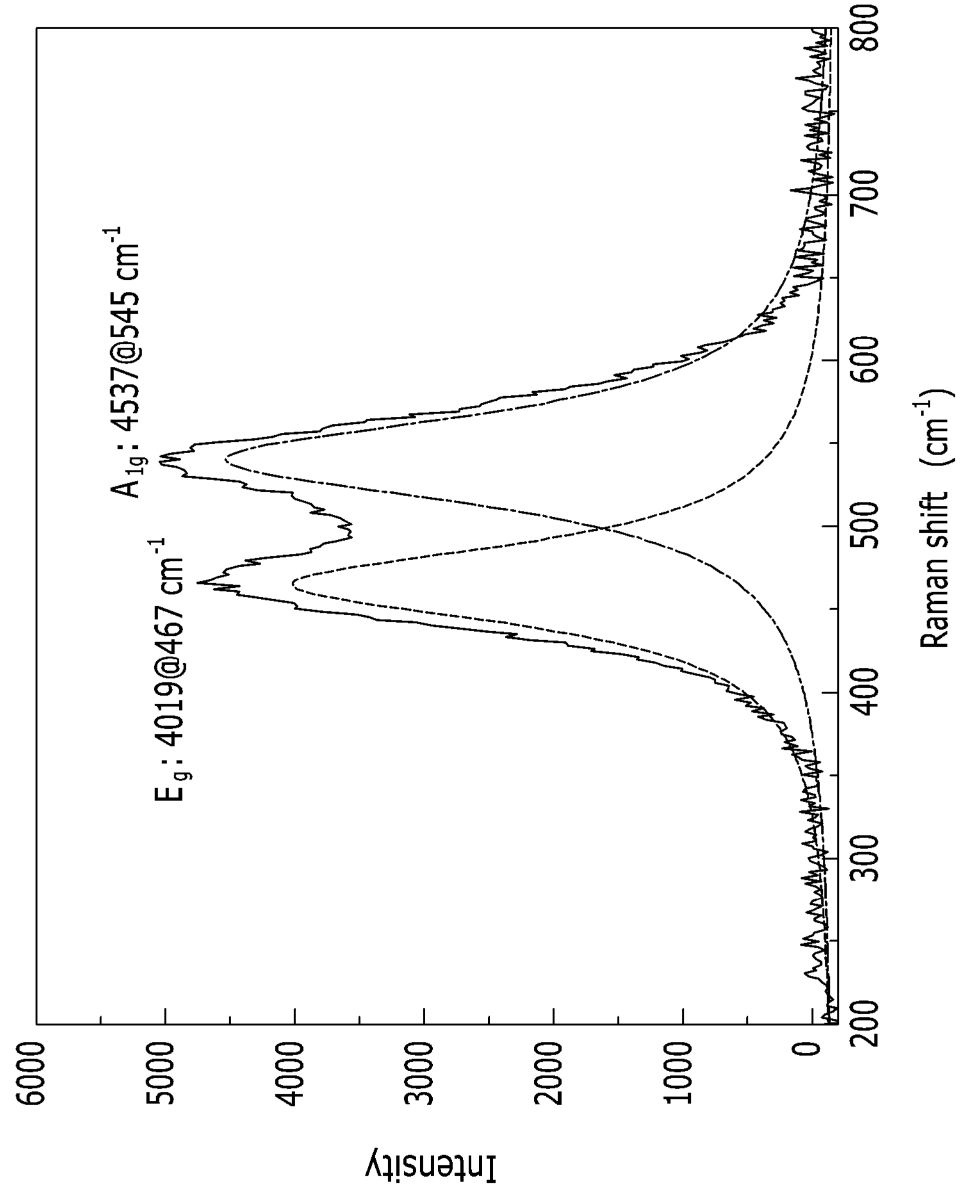

A1g : 4537@545 cm-1
Eg : 4019@467 cm-1
Intensity
Raman shift (cm-1)
0
1000
2000
3000
4000
5000
6000
200
300
400
500
600
700
800

FIG. 4

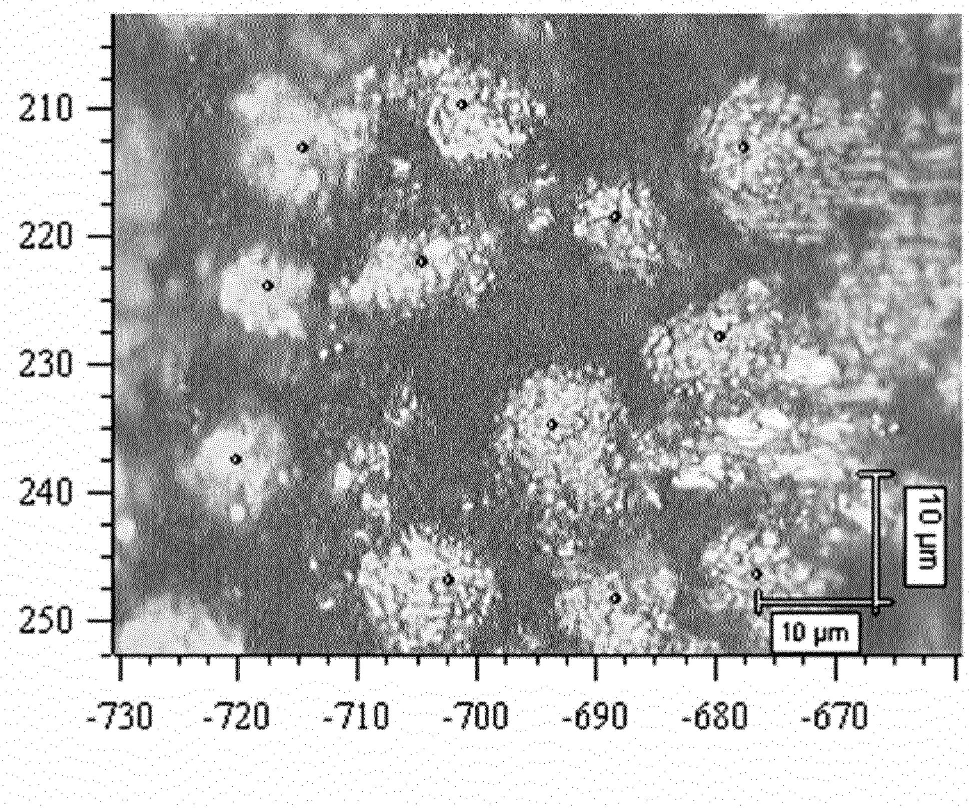

FIG. 5

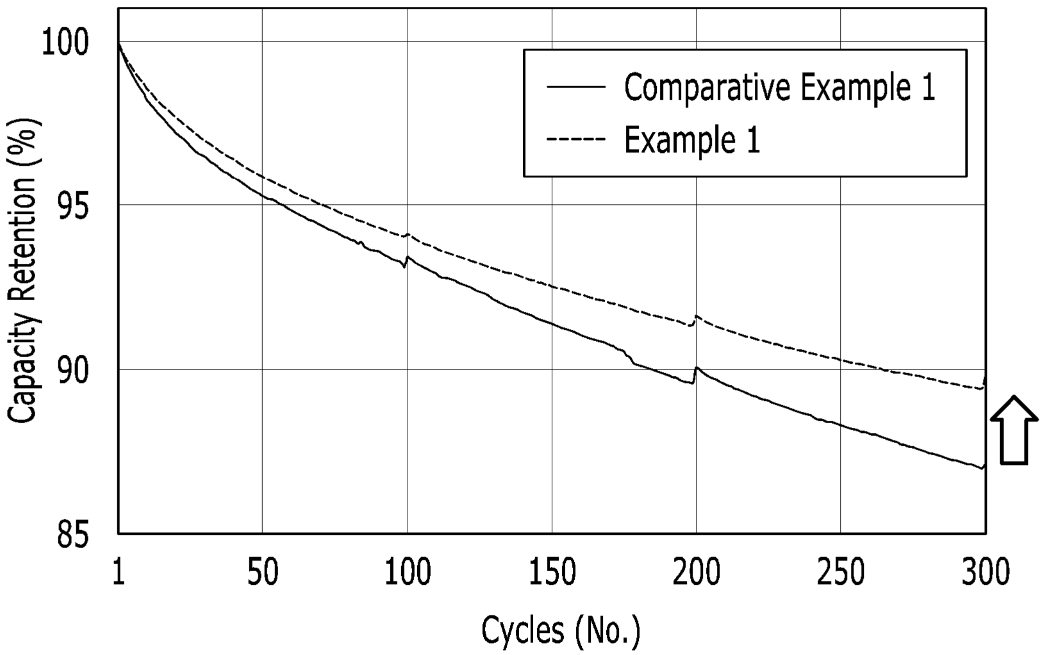
100
95
90
85
Capacity Retention (%)
1
50
100
150
200
250
300
Cycles (No.)
Comparative Example 1
Example 1

FIG. 6

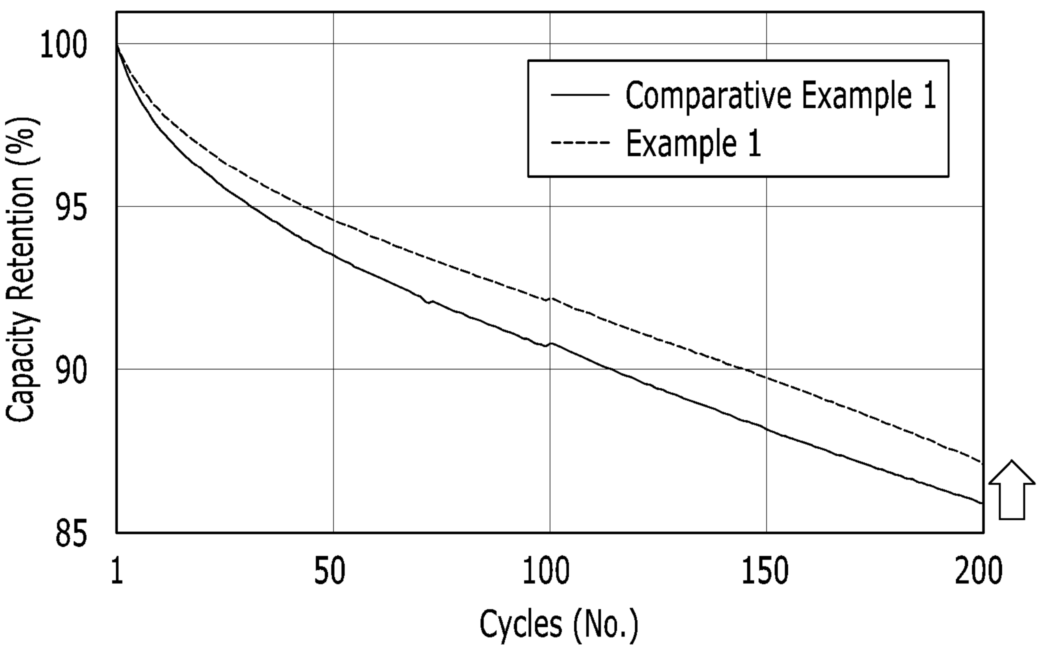
Comparative Example 1
Example 1
100
95
90
85
Capacity Retention (%)
1
50
100
150
200
Cycles (No.)

FIG. 7

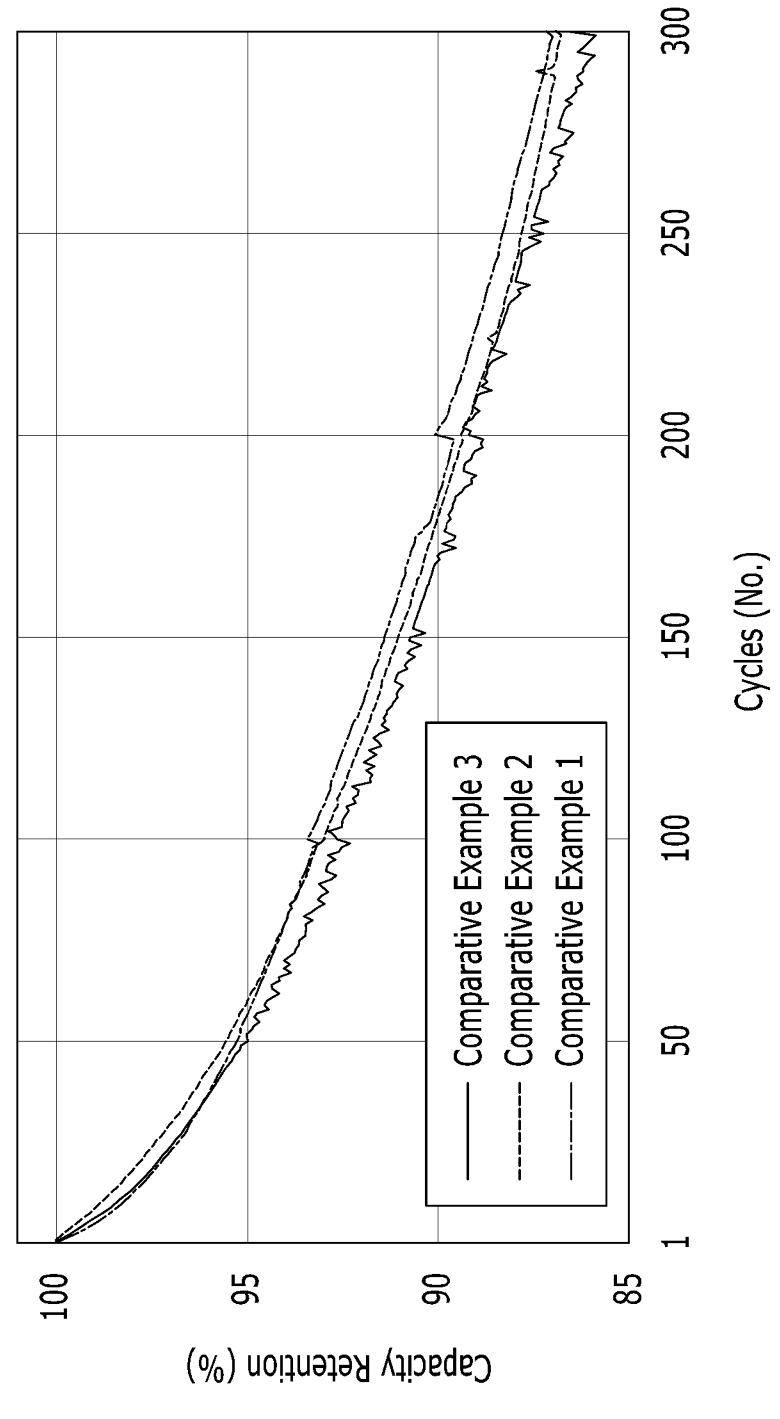
Capacity Retention (%)
100
95
90
85
Cycles (No.)
1
50
100
150
200
250
300
Comparative Example 3
Comparative Example 2
Comparative Example 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20100167118 A1
- US 20050142440 A1
- CN 205564891 U


### Non-patent literature cited in the description


- **ROBERT KOSTECKI et al.** *Diagnostic Examination of Generation 2 Lithium-Ion Cells and Assessment of Performance Degradation Mechanisms,* 31 July 2005, 1-196
- **HAI YEN TRAN et al.** *JOURNAL OF POWER SOURCES, ELSE VIER SA, CH,* 07 March 2012, vol. 210, 276-285